# FASCICULE DE BREVET EUROPEEN

(11) **EP 2 552 243 B1**
(45) Date de publication et mention de la délivrance du brevet: **30.03.2016**
(21) Numéro de dépôt: 11719318.5
(22) Date de dépôt: 30.03.2011
(51) Int. Cl.: A23L 35/00, C09D 191/06

(54) **NOUVELLE CIRE D'ENROBAGE À BASE DE COPOLYMÈRES, SES UTILISATIONS ET SON PROCÉDÉ DE PRÉPARATION**
NEUARTIGES BESCHICHTUNGSWACHS AUF DER BASIS VON COPOLYMEREN, IHRE VERWENDUNG SOWIE HERSTELLUNGSVERFAHREN DAFÜR
NOVEL COATING WAX BASED ON COPOLYMERS, USES THEREOF AND PROCESS FOR PREPARING SAME

(30) Priorité: 31.03.2010 FR 1052404
(43) Date de publication de la demande: 06.02.2013
(73) Titulaire: Fromageries Bel, 92150 Suresnes (FR)
(72) Inventeur: PENNARUN, Pierre-Yves, F-41100 Vendôme (FR)
(74) Mandataire: Blot, Philippe Robert Emile
(86) Numéro de dépôt international: PCT/FR2011/050714
(87) Numéro de publication internationale: WO 2011/121239

(56) Documents cités:
- EP-A1- 1 917 862
- WO-A1-2007/101909
- WO-A1-2009/016239
- WO-A2-2009/047332
- US-B2- 7 312 272
- Sébastien Perrier ET AL: "Reversible Addition-Fragmentation Chain Transfer Polymerization: End Group Modification for Functionalized Polymers and Chain Transfer Agent Recovery", Macromolecules, vol. 38, no. 6, 1 March 2005 (2005-03-01), pages 2033-2036, XP055205730, ISSN: 0024-9297, DOI: 10.1021/ma047611m

## Description

La présente invention a pour objet une nouvelle composition d'enrobage, sous forme de cire d'enrobage, notamment pour fromages. Elle a également pour objet le procédé de préparation de ladite composition, ainsi qu'un procédé d'enrobage de produits alimentaires par cette composition et les produits alimentaires ainsi enrobés.

Certains fromages, plus particulièrement des fromages à pâte ferme, sont conditionnés sous un enrobage protecteur afin d'éviter d'une part, la dessiccation des fromages au cours de leur conservation et de leur commercialisation et d'autre part, l'altération du fromage par des microorganismes.

A l'exception des enduits à base de matériaux plastiques synthétiques, de type polymère d'acétate de vinyle, les cires sont les matériaux d'enrobage les plus couramment utilisés.

Des cires de différentes origines sont utilisées à cet effet. Les cires d'hydrocarbures d'origine pétrolière sont largement utilisées ; elles sont constituées d'un mélange de paraffines, de cires microcristallines, et éventuellement d'huiles minérales. Ce type d'enrobage ainsi que son mode d'application sont décrits dans la demande de brevet FR 1 453 977.

Ces matériaux d'enrobage, particulièrement les cires d'enrobages, doivent présenter un caractère plastique et malléable, ne pas être cassants ou ne pas adhérer au fromage lors de l'élimination au moment de la consommation des fromages.

Par ailleurs, ces matériaux d'enrobage, particulièrement les cires d'enrobages, doivent présenter des propriétés de fusion. Ils sont liquides aux températures d'enrobage des fromages par trempage ou par pulvérisation (40 à 100°C). Ils sont cireux et solides à température ambiante, après cristallisation de leurs constituants.

Si les cires d'hydrocarbures les plus communément utilisées présentent d'excellentes propriétés fonctionnelles et répondent en tous points aux critères ci-dessus, elles présentent cependant un impact environnemental non négligeable car d'une part, elles sont issues de ressources non renouvelables, et d'autre part, lors de leur incinération ou biodégradation (compost), elles produisent des gaz à effet de serre contribuant au réchauffement climatique.

De nombreux auteurs ont d'ailleurs cherché à trouver des composés de substitution ; on peut citer les enrobages, sous forme de cires, constitués de mono et diglycérides d'acides gras qui comparativement aux cires d'hydrocarbures, présentent des défauts à température ambiante. Ces produits de substitution sont :
- de moindre résistance mécanique aux chocs,
- parfois de caractère cassant avec une tendance à l'écaillage lors de leur élimination au moment de la consommation du produit, plus particulièrement lorsque l'ouverture de l'enrobage est réalisée par une bande d'arrachage (tircel) ; ceci est d'autant plus vrai que l'on utilise une fraction importante de produits cristallins à température de fusion élevée, comme par exemple des acides gras à longue chaîne,
- parfois de caractère collant et gras au toucher pour des produits obtenus par exemple à partir d'acides gras plus courts et dont la température de fusion est inférieure à 40°C,
- parfois moins résistants aux agressions extérieures comme les micro-organismes (lipolyse).

Bien que certains de ces enrobages, notamment sous forme de cires, présentent de bonnes propriétés plastiques à température ambiante, on constate un moins bon comportement de ces enrobages à des températures supérieures ou inférieures susceptibles de survenir au cours du cycle de distribution du fromage. Ainsi, certains produits apparaissent trop cassants à des températures de l'ordre de 4°C alors que d'autres présentent un caractère très collant avec apparition de graissage, collage au suremballage, migration éventuelle des colorants, ou des composants glycériques de l'emballage. De plus, les constituants de ces enrobages ont une structure chimique très proche de celle des triglycérides fromage et ont une masse moléculaire faible, ce qui peut favoriser leur migration et leur miscibilité éventuelles vers le fromage.

Pour pallier ces problèmes, certaines compositions d'enrobage utilisent des polymères d'esters vinyliques d'acides gras comme enduits dispersibles dans l'eau. Ce type d'enrobage ainsi que son mode d'application sont décrits dans le brevet EP 2 044 836. Le produit final est enrobé par un film ou une pellicule d'épaisseur inférieure à 500 µm, et plus particulièrement inférieure à 100 µm.

De même, US 7312272 concerne des dispersions aqueuses de copolymères de type poly (vinyl ester), notamment utiles pour l'enrobage de produits alimentaires. Cependant les copolymères utilisés ne sont pas des copolymères « à blocs », la polymérisation en émulsion aboutissant invariablement à des copolymères « statistiques ». WO2009/016239 concerne des dispersions aqueuses de copolymères triblocs, notamment utiles pour le revêtement de divers substrats, mais ne divulgue pas l'utilisation de ces dispersions pour l'enrobage de produits alimentaires. EP1917862 concerne des compositions d'enrobage de fromages, comprenant une dispersion aqueuse de polymères et une cire à titre d'additif.

Cependant, ces produits ne présentent pas les propriétés requises pour une cire d'enrobage en termes de fusion/cristallisation pour l'opération d'enrobage, résistance aux chocs et facilité d'élimination par pelabilité à la consommation. En effet, comme tout enduit, leur élimination se fait par écroûtage et la dépose de ces dispersions aqueuses à la superficie des fromages nécessite une opération de séchage. De plus, ce procédé d'enrobage est inclus dans le processus même de maturation du fromage et n'est donc pas à proprement parler destiné à la conservation et au transport des fromages.

Afin d'améliorer la pelabilité et de diminuer le caractère collant de l'enrobage, certaines compositions d'enrobage utilisent un mélange d'un copolymère d'acétate de vinyle, de maléate de dibutyle et de cire. Ce type d'enrobage ainsi que son mode d'application sont décrits dans la demande internationale WO 2007/116020. Si la pelabilité de l'enrobage est nettement améliorée, ces compositions sont cependant également obtenues à partir de dispersions aqueuses de copolymères et nécessitent donc une phase de séchage.

Des compositions d'enrobage à base de copolymères à blocs ont aussi été décrites.

WO 2009/016 239 décrit une composition à base de matériaux constitués d'au moins 2 blocs de monomères vinyliques dont au moins un est cristallisable. Ces polymères sont fabriqués en solution selon un procédé de polymérisation particulier appelé RAFT. Cette composition de polymères est utilisée en dispersion aqueuse pour fournir des enrobages sous forme de films cristallisables, utilisés comme films ou enduits de surfaces, par exemple métalliques ou plastiques. La composition d'enrobage de WO 2009/016 239 n'est pas appropriée à fournir une cire d'enrobage, a fortiori une cire d'enrobage de produit alimentaire. Par ailleurs le procédé RAFT introduit des quantités non négligeables de composés soufrés connus pour être très odorants et donc incompatibles pour usage alimentaire. En effet, la migration de ces composés dans le produit alimentaire induirait des défauts organoleptiques.

WO 2009/065 749 décrit un composé polymère utilisé comme additif dans des compositions plastiques. Ce polymère est solubilisé dans un monomère réactif liquide à température ambiante pour être intégré dans une autre composition polymérique. Ce polymère n'est pas utilisé seul. Il n'est en aucun cas destiné à être utilisé comme enrobage alimentaire car il faudrait dans ce cas opérer la transformation chimique finale de ce polymère directement sur le produit à enrober, ce qui paraît hautement improbable dans la pratique.

La cire d'origine fossile reste donc à ce jour la solution la plus intéressante et donc la plus utilisée pour l'enrobage de produit alimentaire.

La présente invention a pour but de fournir une composition d'enrobage de produit alimentaire présentant des caractéristiques physico-chimiques et fonctionnelles satisfaisantes.

La présente invention a aussi pour but de fournir une cire d'enrobage de produit alimentaire présentant des caractéristiques physico-chimiques et fonctionnelles satisfaisantes.

La présente invention a également pour but de fournir une composition d'enrobage de produit alimentaire permettant de s'affranchir des inconvénients susmentionnés relatifs aux cires d'hydrocarbures, notamment en ce qui concerne les coûts et les nuisances pour l'environnement.

Ainsi, la présente invention concerne une nouvelle composition d'enrobage d'un produit alimentaire, notamment une cire d'enrobage d'un produit alimentaire, notamment de fromage, et plus particulièrement de fromage à pâte ferme, comprenant au moins un copolymère à blocs constitué d'au moins un bloc de polymère (A) issu de la polymérisation d'au moins deux monomères (M_{A}), identiques ou différents, dérivés d'acides gras à chaîne longue, comprenant de 14 à 34, plus particulièrement de 14 à 22, en particulier de 14 à 18 atomes de carbone, et d'au moins un bloc de polymère (B), différent de (A), issu de la polymérisation d'au moins deux monomères (M_{B}), identiques ou différents, dérivés d'acides gras à chaîne courte, plus particulièrement comprenant de 2 à 16 atomes de carbone.

Dans le cadre de la présente invention, le terme « composition d'enrobage » désigne une cire d'enrobage.

Dans le cadre de la présente invention, on entend par « cire d'enrobage » un mélange malléable à température ambiante (typiquement entre 15 et 30°C), généralement à base de polymères et/ou de molécules comprenant de 5 à 50 atomes de carbone, dont les propriétés essentielles sont l'hydrophobicité, des propriétés barrières à la vapeur d'eau, une température de fusion supérieure à la température ambiante, c'est-à-dire généralement supérieure à 35°C, et une faible viscosité à l'état fondu. La cire d'enrobage de l'invention est éliminée par pelage avant la consommation du produit alimentaire enrobé.

Par ailleurs, la cire d'enrobage de l'invention présente une viscosité suffisamment faible à l'état fondu pour permettre un enrobage de produits alimentaires, essentiellement par trempage ou encore par pulvérisation. Lors de son utilisation dans un procédé d'enrobage de produit alimentaire, la cire d'enrobage de l'invention n'est à aucun moment dispersée dans l'eau.

La cire d'enrobage de l'invention est insoluble dans l'eau.

La cire d'enrobage de l'invention contient une teneur en eau très réduite, généralement inférieure à 10%, de préférence inférieure à 5%, préférentiellement inférieure à 1% en poids par rapport au poids total de la cire d'enrobage.

De préférence, la cire d'enrobage de l'invention ne contient pas d'eau.

Dans le cadre de la présente invention, on entend par chaîne longue une chaîne alkyle saturée de type linéaire ou ramifié, comportant au moins 14 atomes de carbone.

Dans le cadre de la présente invention, on entend par chaîne courte une chaîne alkyle saturée de type linéaire ou ramifié, comportant moins de 16 atomes de carbone.

On entend par « copolymère à blocs » un polymère (M_{A})ₙ-(M_{B})ₘ constitué d'au moins deux homopolymères (M_{A})ₙ et (M_{B})ₘ liés par des liaisons covalentes ; n et m étant des nombres entiers supérieurs à 1. Chaque bloc de copolymère (homopolymères (M_{A})ₙ ou (M_{B})ₘ) est issu de la polymérisation d'un seul type de monomère ((M_{A}) ou (M_{B})).

On entend par monomères dérivés d'un acide gras ou monomères dérivés d'un acide gras fonctionnalisés (MAGF = Monomères d'Acides Gras Fonctionnalisés), des monomères dérivés d'acides gras (et/ou de leurs dérivés) fonctionnalisés par des greffons contenant une double liaison éthylénique C=C. Ils sont obtenus à partir d'acides gras saturés et/ou de leur dérivés tels que les alcools ou les éthers, qui sont linéaires ou ramifiés. Les acides gras saturés et leurs dérivés sont issus de composés d'origine naturelle (matières grasses alimentaires par exemple), ou après une étape d'hydrogénation totale d'acides gras insaturés, ou bien encore après une transformation chimique des fonctions acides carboxyliques des acides gras (alcools et éthers). Les MAGF contiennent donc une fonction éthylénique qui est substituée au moins une fois par un acide gras ou dérivé d'acide gras.

Les MAGF sont obtenus préférentiellement, mais pas exclusivement, à partir des acides gras présents dans la matière grasse végétale, car ces derniers présentent des propriétés physicochimiques proches de celles de la cire minérale tout en étant largement répandus, disponibles et renouvelables. Une autre source d'acides gras, qui sera utilisée en minorité dans la présente cire du fait de son caractère non renouvelable, concerne l'oxydation des paraffines et produits assimilés comme les huiles minérales (hydrocarbures à chaîne courtes comprenant moins de 25 atomes de carbone, ou hydrocarbures cycliques hydrogénés). Cette source sera utilisée uniquement à des fins de modification de propriétés physico-chimiques ne pouvant être obtenues par des MAGF d'origine renouvelable. Enfin, une autre source d'acides gras est obtenue par oxydation de paraffine ou cire de poly(éthylène) de synthèse obtenues préférentiellement à partir de matières premières renouvelables (méthane de la biomasse par exemple). Ces MAGF sont obtenus à partir d'acides ou d'alcools gras insaturés, linéaires ou ramifiés et de longueur de chaîne carbonée variable, comprise avantageusement entre 2 et 22 atomes de carbone inclus ; toutefois, des acides ou alcools gras ayant des chaînes carbonées de taille supérieure (jusqu'à plus de 34 carbones) peuvent être utilisés. On peut citer comme exemple d'acides gras linéaires pouvant être fonctionnalisés, l'acétate (C2), le dodécanoate (C12) ou le stéarate (C18); on peut citer comme exemple d'acides gras ramifiés pouvant être fonctionnalisés, les mélanges d'isomères tels que les néododécanoate (C12), néodécanoate (C10), néononaoate (C9), ou encore néooctanoate (C8); on peut citer comme exemple d'alcools gras, l'éthanol (C2), le butanol (C4), le dodecanol (C12), l'hexadecanol (C18).

La demanderesse a démontré de façon tout à fait inattendue qu'un mélange de polymères obtenus à partir de MAGF présentait des propriétés physiques (fusion) et mécaniques (taux de cristallinité) équivalentes à celles de la cire d'enrobage pour fromage et lui permettant d'être utilisé comme tel. Elle a également démontré que ce matériau présente également toutes les aptitudes de protection du produit, de résistance aux chocs et de pelabilité indispensables à un usage d'enrobage pour fromage.

En effet, la demanderesse a démontré qu'un produit issu de la copolymérisation dans des proportions appropriées de blocs de MAGF permet d'obtenir des substances liquides aux températures d'enrobage des fromages par trempage ou pulvérisation et solides à température ambiante après cristallisation de ces blocs.

Dans la présente invention, le terme fromage désigne tout fromage suffisamment ferme pour être enrobé, c'est-à-dire ayant un extrait sec supérieur à 45%, qu'il soit issu :
- d'une première transformation directement à partir de lait entier, écrémé ou mélange des deux ; le lait étant sous forme liquide ou de poudre reconstituée, de concentrés laitiers liquides ou sous forme de poudre reconstituée,
- ou d'une seconde transformation par un traitement de fonte ou de procédé selon la demande de brevet FR 2 778 821 ou procédé équivalents.

La matière grasse laitière peut y être remplacée totalement ou partiellement par de la matière grasse végétale.

Parmi les fromages commercialisés sous enrobage, on peut citer les fromages à pâte pressée de type Gouda, Edam, Cheddar, des fromages frais à pâte filée (mozzarella par exemple) mais aussi des fromages fondus fermes.

Selon un mode de réalisation préféré, les monomères (M_{A}) et (M_{B}) répondent à la formule générale suivante (I) : 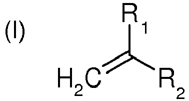 dans laquelle :
R₁ représente un atome d'hydrogène ou une chaîne alkyle linéaire ou ramifiée comportant de 1 à 6 atomes de carbone ;
R₂ représente un groupe (CH₂)ₚ-OCOR₃, (CH₂)ₚ-OR₄ ou COOR₅ avec p = 0 ou 1 ; R₃, R₄ et R₅ étant identiques ou différents et représentant des chaînes alkyles ramifiées ou linéaires provenant d'acides gras saturés.

Pour (M_{A}), la chaîne alkyle des groupes R₃, R₄ et R₅ comprend au moins 14 atomes de carbone. Pour (M_{B}), la chaîne alkyle des groupes R₃, R₄ et R₅ comprend au plus 16 atomes de carbone.

L'invention concerne en particulier une nouvelle composition d'enrobage pour fromage, typiquement une cire d'enrobage, constituée d'au moins un bloc de polymère (A) issu de la polymérisation d'un monomère (M_{A}) pur ou en mélange choisi parmi les MAGF suivants : ester vinylique d'acide(s) gras, et/ou d'un acrylate d'alcool(s) gras, et/ou d'un méthacrylate d'alcool(s) gras, et/ou d'un ester allylique d'acide gras, et/ou éther allylique d'acide ou d'alcool gras, et/ou encore d'un éther vinylique d'acide ou alcool gras ; et d'au moins un bloc de polymère (B) issu de la polymérisation d'un monomère pur (M_{B}) ou d'un mélange de monomères choisis parmi les familles citées pour le bloc (A), ce monomère ou mélange de monomères dans le bloc (B) étant différent de (A).

Parmi les monomères (M_{A}) et (M_{B}) préférés, on peut notamment citer les monomères de formules suivantes :

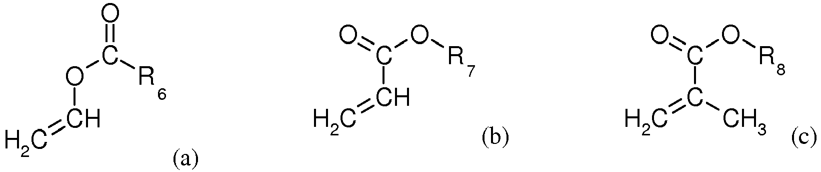

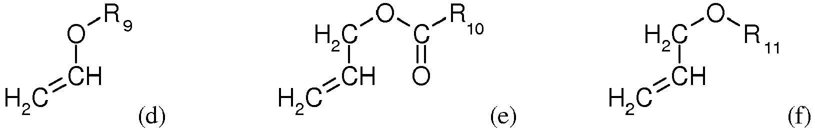

La formule (a) représente un ester vinylique d'acide gras, la formule (b) représente un acrylate d'alcool gras, la formule (c) représente un méthacrylate d'alcool gras, la formule (d) représente un éther de vinyle, la formule (e) représente un ester allylique d'acide gras et la formule (f) représente un éther d'allyle.

Dans les formules (a) à (f), les groupes R₆ à R₁₁ représentent des chaînes alkyles ramifiées ou linéaires provenant d'acides gras saturés tels que définis ci-dessus.

De préférence, les blocs de polymères (A) sont obtenus à partir de monomère(s) (M_{A}) dérivés d'acides gras à chaine longue, comme par exemple le stéarate de vinyle, le béhénate de vinyle, le méthacrylate de stéaryle, le méthacrylate de béhényle, l'acrylate de stéaryle ou encore l'acrylate de béhényle.

De préférence, les monomères (M_{A}) sont des esters vinyliques d'acides gras à chaîne longue de formule (a), comme par exemple le stéarate de vinyle.

De préférence, les monomères (M_{A}) sont des acrylates d'alcool gras à chaîne longue de formule (b), comme par exemple l'acrylate de stéaryle.

Les polymères (A) à longues chaînes sont de préférence cristallins à température ambiante.

Selon un mode de réalisation préféré, les blocs de polymères (B) sont obtenus à partir de monomère(s) (M_{B}) dérivés d'acides gras à chaine courte, comme par exemple le dodécanoate de vinyle, l'acétate de vinyle ou encore l'acrylate de dodécyle, ou à chaine ramifiée, comme par exemple le néodécanoate de vinyle.

De préférence, les monomères (M_{B}) sont des esters vinyliques d'acides gras à chaîne courte de formule (a), comme par exemple le dodécanoate de vinyle, seul ou en mélange avec du néodécanoate de vinyle.

De préférence, les monomères (M_{B}) sont des acrylates d'alcool gras à chaîne courte de formule (b), comme par exemple l'acrylate de dodécyle.

Les polymères (B) à chaînes courtes sont de préférence amorphes à température ambiante et à la température de conservation au frais (2 - 8 °C).

Ainsi, selon un mode de réalisation avantageux, la composition d'enrobage selon l'invention est obtenue par synthèse de blocs de monomères, et ce dans des proportions définies d'un monomère (M_{A}) et d'un monomère (M_{B}) comprises de 5/95 à 95/5, avantageusement de 20/80 à 80/20, de préférence de 30/70 à 70/30 et préférentiellement de 40/60 à 60/40.

Afin de réduire le risque de migration lors de l'enrobage, on préfère utiliser des copolymères à blocs avec une masse moléculaire la plus élevée possible, notamment supérieure à 1000 Da et inférieure à 100 000 Da, plus particulièrement inférieure à 50 000 Da, et préférentiellement inférieure à 30 000 Da.

Selon un mode de réalisation particulier, la composition d'enrobage selon l'invention peut comprendre en outre un additif dont la proportion massique est inférieure à 30% de la masse totale de la composition.

Par additif, on entend notamment les sels d'acides gras (E470), ou bien les esters d'acides gras comme par exemple les mono- et diglycérides d'acides gras (E471), les esters d'acides gras (E472), les sucroesters d'acides gras (E473), les sucroglycérides (E474), les esters polyglycériques d'acides gras (E475), les esters d'acides gras de sorbitane (E491 à E495) comme par exemple le tristéarate de sorbitane. On entend également par additif les cires d'origine naturelle comme par exemple les cires d'abeille (E901), de candelilla (E902), de carnauba (E903), Shellac (E904). On entend également par additif, mais moins préférentiellement, les cires d'origine fossile, donc non renouvelable, comme la cire microcristalline ou la cire paraffinique.

L'invention concerne également une composition, typiquement une cire d'enrobage, obtenue à partir d'un copolymère multi-blocs constitué d'au moins 2 monomères (copolymère ABA obtenu à partir des monomères (M_{A}) et (M_{B})) ou plus de 2 monomères (copolymère ABC par exemple pour un polymère synthétisé à partir de monomères (M_{A}), (M_{B}) et (M_{C})). Le monomère (M_{C}) utilisé pour la synthèse de ce polymère peut être choisi dans une même famille chimique (vinyliques, acrylates, méthacrylates, maléates, allyliques) ou bien de familles différentes, ou bien encore ce monomère peut être mono, di, tri ou quadri substitué par des acides gras et dérivés.

L'invention concerne également le procédé de préparation d'une composition d'enrobage telle que définie ci-dessus, comprenant essentiellement des étapes de polymérisation des blocs de monomères (M_{A}) et (M_{B}). Les blocs des copolymères peuvent être préparés par introductions successives des monomères constituant les blocs successifs (M_{A}) et (M_{B}). La réalisation de synthèses plus spécifiques peut également être envisagée. Ainsi, l'introduction d'agents de transfert dans le milieu réactionnel en fin de synthèse peut permettre de réduire les masses moléculaires moyennes. Parmi les agents de transfert, peuvent être cités les thiols, les disulfures, les halocarbonés, certains vinyles éthers, certains solvants comme les alcools tertiaires, le toluène ou le chloroforme. Les agents de transfert peuvent être éliminés par évaporation à chaud et sous vide lors des étapes de désodorisation. Enfin, l'initiateur lui-même ou un autre initiateur peut assurer cette fonction lorsque rajouté en fin de réaction. Ces agents de transfert et les modes d'utilisation sont bien connus de l'homme du métier, comme par exemple dans le domaine des poly(éthylène-co-acétate de vinyle).

Le mode de polymérisation qui sera plus préférentiellement adopté, est celui qui consiste à réaliser un polymère à architecture et masse moléculaire contrôlées. Parmi ces architectures, on peut citer par exemple les copolymères linéaires, les copolymères en peigne, les copolymères en étoile, ou encore les copolymères dendritiques hyperbranchés. Ces architectures et masses moléculaires contrôlées sont obtenues par les réactions de polymérisation vivante telles que la polymérisation anionique, cationique ou radicalaire contrôlée (CRP). Parmi ces modes de synthèse, la polymérisation radicalaire par transfert d'atome (ATRP), ou la polymérisation radicalaire avec transfert de chaîne par addition-fragmentation réversible (RAFT) ou encore la polymérisation avec médiation par les nitroxides (NMP), permettent de réaliser des copolymères multi blocs à faible masse moléculaire.

La réaction de polymérisation se fait préférentiellement par initiation thermique d'un initiateur radicalaire, ou en présence d'un initiateur anionique ou cationique. Les initiateurs radicalaires les plus couramment utilisés font partie de la famille des peroxydes organiques (peroxydes de diacyle, peroxydes de dialkyle, les hydro-peroxydes, les peroxydes de cétones, les peroxydes de dicarbonate, les peroxyesters); des initiateurs radicalaires minéraux sont également disponibles comme par exemple le di-iode (I₂) ou les persulfates de sodium, de potassium ou d'ammonium. Toutefois des initiateurs anioniques (hydroxydes, alcoolates, carbanions comme l'anion butyle dans le lithium de butyle) ou cationiques (acide, carbocations, ammonium), voire directement la lumière peuvent être utilisés pour initialiser la réaction. Parmi tous ces initiateurs, seront préférentiellement utilisés les initiateurs radicalaires provenant de ressources renouvelables comme par exemple le peroxydicarbonate de dimyristyle (N° CAS 53220-22-7), le peroxyde de didécanoyle (N° CAS 762-12-9), le peroxydicarbonate de dicétyle (N° CAS 26322-14-5), le peroxydicarbonate de di(n-propyle) (N° CAS 16066-38-9) ou le peroxyde de dilauroyle (N° CAS 105-74-8) dont les constituants principaux sont des dérivés des acides gras.

La polymérisation radicalaire s'effectue à une température comprise de 50°C à 200°C selon l'initiateur utilisé et la cinétique de réaction souhaitée. Une température de réaction supérieure à la température de fusion des monomères et du polymère obtenu sera préférentiellement utilisée, soit supérieure à 50°C ; une température la plus faible possible sera préférentiellement utilisée afin de réduire les risques de dégradation des matières premières, de permettre l'utilisation de solvant(s) ou d'agents de transfert de faible température d'ébullition facilitant leur élimination après synthèse, ou bien encore pour réduire l'impact de la synthèse sur l'environnement et le coût de fabrication.

L'invention concerne aussi un procédé d'enrobage d'un produit alimentaire, notamment d'un fromage et plus particulièrement d'un fromage à pâte ferme comprenant une étape d'application sur un produit alimentaire entier ou sur une portion d'un produit alimentaire de la composition selon l'invention, typiquement une cire d'enrobage selon l'invention.

Selon un mode de réalisation particulier, l'étape d'application susmentionnée consiste à tremper le produit à enrober dans la composition à l'état visqueux, cette étape de trempage étant le cas échéant effectuée en 2 fois. Elle est suivie d'une étape de refroidissement du produit enrobé, par trempage dans l'eau glacée, puis mise en chambre froide à une température de 3°C, pendant un temps pouvant aller de 12h à 60 h. Enfin, le produit enrobé est conservé entre 2°C et 6°C jusqu'à la consommation du produit.

Selon un autre mode de réalisation particulier, l'étape d'application susmentionnée consiste à mouler le produit à enrober avec la composition à l'état fondu et très visqueuse, typiquement sous forme de cire fondue et visqueuse. Elle est suivie d'une étape de refroidissement du produit enrobé, par trempage dans l'eau glacée, puis mise en chambre froide à une température de 3°C, pendant un temps pouvant aller de 12h à 60 h. Enfin, le produit enrobé est conservé entre 2°C et 6°C jusqu'à la consommation du produit.

L'invention concerne aussi un produit alimentaire enrobé, notamment fromage enrobé, susceptible d'être obtenu par le procédé susmentionné.

L'invention concerne aussi l'utilisation d'une composition selon l'invention, typiquement d'une cire d'enrobage selon l'invention, pour l'enrobage d'un produit alimentaire, notamment de fromage, et plus particulièrement de fromage à pâte ferme.

### PARTIE EXPERIMENTALE

### Exemple 1 - Enrobage n°1

On peut citer comme composition particulièrement avantageuse celle résultant de la copolymérisation d'un premier bloc de stéarate de vinyle (N° CAS 111-63-7) et d'un deuxième bloc de dodécanoate de vinyle (N° CAS 2146-71-6) dans des proportions comprises entre 40/60 et 60/40. La synthèse est réalisée à 80°C sous atmosphère inerte (azote) et sous agitation permanente. Le premier monomère est introduit dans le réacteur avec l'initiateur radicalaire (peroxyde de lauroyle) et la réaction démarre aussitôt. Lorsque la quantité de monomère ne représente plus que 10% de sa valeur initiale, le second monomère est introduit dans le réacteur et la réaction est poussée jusqu'à son terme. La quantité de monomères résiduels est déterminée par spectroscopie Infrarouge à Transformée de Fourier (échantillon déposé sur un ATR diamant mono réflexion, appareil Spectrum 100 Perkin Elmer, 16 scans, 400-4000 cm⁻¹, résolution 4 cm⁻¹ : la cinétique et le rendement de réaction sont suivis à partir des aires des bandes d'absorption situées à 1760 cm⁻¹ pour la fonction ester du monomère, à 1724 cm⁻¹ pour la fonction ester du polymère et à 1646 cm⁻¹ pour la fonction vinylique) et la synthèse est arrêtée lorsque la concentration de monomère devient inférieure à 0,5% de l'initiale (limite de détection). Les monomères résiduels sont éliminés par chauffage sous vide (<10 mbar - 100°C) pendant 24h. La masse moléculaire moyenne en nombre du polymère (Mₙ) est déterminée par chromatographie d'exclusion stérique (ISO 16014). Le polymère obtenu dans ce cas précis a une masse moléculaire moyenne en nombre (Mₙ) inférieure à 100 000 Da. Le produit obtenu est analysé par calorimétrie différentielle à balayage (DSC2920 TA Instrument calibré à l'Indium). L'échantillon est d'abord chauffé à 120°C pour effacer son histoire thermique puis refroidi à -100°C à 4°C/min. Les températures de fusion (sommets des pics de fusion) sont alors déterminées après chauffage à 4°C/min de -100°C à 120°C.

Le polymère présente une température de fusion de 47°C pour le bloc contenant des acides gras longs et une température de fusion de -2°C pour le bloc d'acides gras courts. Une troisième zone de fusion de faible intensité est visible. Avec les deux autres zones de fusion, elle indique la présence d'un troisième bloc dans le polymère. Celui à -2°C correspond au poly(dodécanoate de vinyle), celui à 47°C au poly(stéarate de vinyle) et le troisième situé entre 5°C et 30°C à un petit bloc de poly(dodécanoate de vinyle-co-stéarate de vinyle) produit lors de l'incorporation du second monomère alors qu'il restait encore 10% du premier monomère. L'enthalpie de fusion de ce polymère, prise dans le domaine d'utilisation, c'est-à-dire 0°C à 95°C est de l'ordre de 50 J/g contre un ordre de grandeur de 150 J/g pour une cire d'origine minérale (cires analysées par DSC dans les mêmes conditions de refroidissement depuis l'état fondu pour effacer leur histoire thermique puis de chauffage).

Cette composition (n°1) a été testée comme enrobage pour fromage selon un procédé de dépose par trempage manuel à une température comprise entre 80°C et 95°C, avec des résultats positifs comparables à un témoin sous cire minérale. Le poids des enrobages est de 4g pour un fromage de 20g. Une bande d'ouverture est utilisée entre la cire et le fromage pour permettre l'ouverture de la cire par déchirement puis arrachage. Pour les deux types d'enrobage (présente invention et témoin), l'ouverture est franche et la cire après ouverture forme deux demi-coques solides et malléables. La cire de la présente invention reste plus plastique dans le sens où sa masse moléculaire est de 100 000 Da contre moins de 1500 Da pour le témoin.

La composition de l'enrobage n°1 présente toutes les caractéristiques d'une cire d'enrobage pour produits alimentaires.

### Exemple 2 - Enrobage n °2

Une autre composition d'enrobage avantageuse consiste à réaliser une synthèse dans les mêmes conditions que précédemment avec 2 blocs de monomères, par exemple un premier bloc de stéarate de vinyle (50% du total en poids) et second bloc (50% du total en poids) constitué d'un mélange dans des proportions définies de 80% de dodécanoate de vinyle et de 20% d'isomères de néodécanoate de vinyle (N° CAS 51000-52-3). Le premier bloc de stéarate de vinyle conserve une température de fusion de 47°C tandis que le second bloc possède une température de fusion de -8°C et une enthalpie de fusion beaucoup plus faible que pour un bloc équivalent de poly (dodécanoate de vinyle). Cette propriété provient du fait que le poly (néodécanoate de vinyle) est un polymère amorphe. La copolymérisation statistique que l'on génère en mélangeant le dodécanoate de vinyle et le néodécanoate de vinyle perturbe la cristallinité du dodécanoate de vinyle dans le polymère, d'où une enthalpie de fusion plus faible (moins de cristallinité) et une température de fusion plus basse. De la même façon, le bloc intermédiaire entre les deux blocs principaux (résidu de stéarate de vinyle à 10% lors de l'incorporation dans la synthèse du mélange pour le second bloc) est lui aussi significativement perturbé puisqu'il ne cristallise plus. Le comportement mécanique de l'enrobage correspondant (n°2) est donc plus régulier entre les basses températures d'utilisation (conservation) et les plus élevées (30-35°C dans la main). Il présente des caractéristiques similaires à l'enrobage n°1, c'est-à-dire qu'il est plus plastique que la cire minérale, il forme deux demi-coques après ouverture mais il est un peu plus souple que le n°1 à basse température.

La composition de l'enrobage n°2 présente toutes les caractéristiques d'une cire d'enrobage pour produits alimentaires.

Selon le type de blocs de monomères employés, les proportions du mélange et les conditions de la synthèse, on obtient donc des compositions d'enrobage dont on peut modifier les propriétés thermiques (température et enthalpie de fusion), pour obtenir un produit remplissant les fonctionnalités de la cire d'enrobage.

Le mélange de deux homopolymères constitués de deux monomères différents conduit au même comportement thermique que les polymères cités précédemment. Ainsi, le mélange de poly (stéarate de vinyle) (enrobage n°3), de poly (dodécanoate de vinyle) (enrobage n°4) et d'un polymère de cohésion (enrobage n°5) possède des propriétés thermiques similaires à l'enrobage n°1 : une fusion à -2°C et une seconde à 50°C. Le polymère de cohésion a pour but de compatibiliser dans le mélange les phases amorphes et cristallines des homopolymères. Cet enrobage conduit cependant plus facilement à des phénomènes de séparation des phases amorphes et cristallines (démixtion) à une température supérieure à 0°C, le poly (dodécanoate de vinyle) étant amorphe. Dans les matériaux des enrobages n°1 et n°2, ces phases amorphes et cristallines sont chimiquement liées entre elles ce qui réduit et élimine ce risque de démixtion.

On peut toutefois noter, comme le montre le tableau 1, que les enrobages n°3 et n°4, constitués d'homopolymères purs, ne permettent pas d'atteindre les propriétés mécaniques requises pour l'enrobage.

Ces exemples montrent bien la nécessité de travailler à partir de polymères « à blocs » pour la réalisation d'un enrobage possédant les propriétés adéquates.

### Exemple 3 - Enrobage n°6

Une autre composition d'enrobage est celle résultant de la copolymérisation d'un premier bloc d'acrylate de stéaryle (N° CAS 4813-57-4) et d'un deuxième bloc d'acrylate de dodécyle (N° CAS 2156-97-0) dans des proportions comprises entre 40/60 et 60/40. La synthèse est réalisée par polymérisation radicalaire contrôlée (ATRP) sous atmosphère inerte (azote) et sous agitation permanente. Les monomères résiduels sont éliminés par précipitation dans un solvant qui est ensuite éliminé sous vide. La masse moléculaire moyenne en nombre du polymère (Mₙ) est déterminée par chromatographie d'exclusion stérique (ISO 16014). Le polymère obtenu dans ce cas précis a une masse moléculaire moyenne en nombre (Mₙ) inférieure à 40 000 Da. Le produit obtenu est analysé par calorimétrie différentielle à balayage (DSC2920 TA Instrument calibré à l'Indium). L'échantillon est d'abord chauffé à 120°C pour effacer son histoire thermique puis refroidi à -100°C à 4°C/min. Les températures de fusion (sommets des pics de fusion) sont alors déterminées après chauffage à 4°C/min de -100°C à 120°C.

Le polymère présente une température de fusion de 45°C pour le bloc contenant des acides gras à chaîne longue et une température de fusion de 8°C pour le bloc d'acides gras à chaîne courte. Entre environ 15°C et environ 40°C, la composition de cire n°6 présente les propriétés requises pour une cire d'enrobage.

**Tableau 1. Récapitulatif des enrobages et de leurs propriétés**

| Enrobage | Températures de fusion des principaux pics de fusion (°C) | Propriétés mécaniques de la cire | Propriétés d'ouverture |
|---|---|---|---|
| Cire minérales (Témoin) | 48-52 °C | Solide, cireux, malléable | Franche et nette |
| Enrobage n°1 | -2°C et 47°C | Cireux - Plastique | Franche et plus résistant que le témoin |
| Enrobage n°2 | -8°C et 47°C | Cireux - Plastique | Franche et un peu plus résistant que le témoin |
| Poly (stéarate de vinyle) n°3 | 50°C | Solide très cassant | Cassant - Ecailles |
| Poly (dodécanoate de vinyle) n°4 | -2°C | Gomme - Très visqueux - Très collant | S'écoule en quelques heures après avoir réalisé l'enrobage |
| Enrobage n°5 | -2°C et 50°C | Solide, séparation de phase au cours du temps, nodules collants | Tendance à s'écailler, présence de fils de polymère amorphe |
| Enrobage n°6 | 8°C et 45°C | Cireux - Malléable à température ambiante | Franche à température ambiante |

## Revendications

1. Cire d'enrobage d'un produit alimentaire, notamment de fromage, et plus particulièrement de fromage à pâte ferme, comprenant au moins un copolymère à blocs constitué d'au moins un bloc de polymère (A) issu de la polymérisation d'au moins deux monomères (M_{A}), identiques ou différents, dérivés d'acides gras à chaîne longue, ladite chaîne longue comprenant de 14 à 34 atomes de carbone, plus particulièrement de 14 à 22 atomes de carbone ; et d'au moins un bloc de polymère (B), différent de (A), issu de la polymérisation d'au moins deux monomères (M_{B}), identiques ou différents, dérivés d'acides gras à chaîne courte, ladite chaîne courte comprenant de préférence de 2 à 16 atomes de carbone.

2. Cire d'enrobage selon la revendication 1, dans laquelle le monomère dérivé d'acide gras (M_{A}) ou (M_{B}) répond à la formule générale suivante (I) : 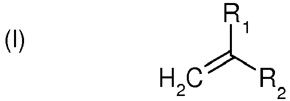 dans laquelle :
- R₁ représente un atome d'hydrogène ou une chaîne alkyle linéaire ou ramifiée comportant de 1 à 6 atomes de carbone ;
- R₂ représente un groupe (CH₂)ₚ-OCOR₃, (CH₂)ₚ-OR₄, groupe COOR₅, avec p = 0 ou1 ;
- R₃, R₄ et R₅ sont identiques ou différents et représentent des chaînes alkyles ramifiées ou linéaires, provenant d'acides gras saturés.

3. Cire d'enrobage selon l'une quelconque des revendications 1 à 2, dans laquelle la proportion en masse des deux monomères (M_{A}) et (M_{B}) est comprise de 5/95 à 95/5, avantageusement de 20/80 à 80/20, de préférence de 30/70 à 70/30 et préférentiellement de 40/60 à 60/40.

4. Cire d'enrobage selon l'une quelconque des revendications 1 à 3, dans laquelle la masse moléculaire du copolymère à blocs est supérieure à 1000 Da et inférieure à 100 000 Da, plus particulièrement inférieure à 50 000 Da, et préférentiellement inférieure à 30 000 Da.

5. Cire d'enrobage selon l'une quelconque des revendications 1 à 4, comprenant en outre un additif dont la proportion massique est inférieure à 30% de la masse totale de la composition.

6. Procédé d'enrobage d'un produit alimentaire, notamment d'un fromage, et plus particulièrement de fromage à pâte ferme, comprenant une étape d'application sur un produit alimentaire entier ou sur une portion d'un produit alimentaire d'une cire d'enrobage telle que définie selon l'une quelconque des revendications 1 à 5.

7. Procédé d'enrobage selon la revendication 6, où l'étape d'application est une étape de trempage du produit à enrober dans la cire d'enrobage à l'état visqueux, cette étape de trempage étant le cas échéant effectuée deux fois, et dans lequel l'étape d'application est suivie d'une étape de refroidissement du produit enrobé, par exemple par trempage dans une solution d'eau glacée.

8. Procédé d'enrobage selon la revendication 6, où l'étape d'application est une étape de moulage du produit à enrober avec la cire d'enrobage à l'état fondu et très visqueuse, et dans lequel cette étape de moulage est suivie d'une étape de refroidissement du produit enrobé, par exemple par trempage dans une solution d'eau glacée.

9. Produit alimentaire enrobé, notamment fromage enrobé, susceptible d'être obtenu par le procédé selon l'une quelconque des revendications 6 à 8.

10. Utilisation d'une cire d'enrobage selon l'une quelconque des revendications 1 à 5 pour l'enrobage d'un produit alimentaire, notamment de fromage, et plus particulièrement de fromage à pâte ferme.

## Patentansprüche

1. Wachsüberzug eines Lebensmittelerzeugnisses, insbesondere eines Käses, und ganz besonders eines Hartkäses, umfassend mindestens ein Blockcopolymer bestehend aus mindestens einem Blockpolymer (A), das aus der Polymerisation von mindestens zwei Monomeren (M_{A}), gleich oder verschieden, stammt, die von langkettigen Fettsäuren abgeleitet sind, wobei die lange Kette 14 bis 34 Kohlenstoffatome, insbesondere 14 bis 22 Kohlenstoffatome umfasst; und aus mindestens einem Blockpolymer (B), verschieden von (A), das aus der Polymerisation von mindestens zwei Monomeren (M_{B}), gleich oder verschieden, stammt, die von kurzkettigen Fettsäuren abgeleitet sind, wobei die kurze Kette 2 bis 16 Kohlenstoffatome umfasst.

2. Wachsüberzug gemäß Anspruch 1, wobei das Monomer, das von Fettsäuren (M_{A}) oder (M_{B}) abgleitet ist, der folgenden allgemeinen Formel entspricht: 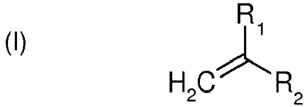 wobei:
- R₁ ein Wasserstoffatom oder eine lineare oder verzweigte Alkylkette enthaltend 1 bis 6 Kohlenstoffe darstellt;
- R₂ eine (CH₂)ₚ-OCOR₃-Gruppe, (CH₂)ₚ-OR₄-Gruppe, COOR₅-Gruppe darstellt, mit p = 0 oder 1;
- R₃, R₄ und R₅ gleich oder verschieden sind und verzweigte oder lineare, von gesättigten Fettsäuren abstammende Alkylketten darstellen.

3. Wachsüberzug gemäß einem der Ansprüche 1 bis 2, wobei der Massenanteil der zwei Monomere (M_{A}) und (M_{B}) im Bereich von 5/95 bis 95/5, vorzugsweise von 20/80 bis 80/20, bevorzugt von 30/70 bis 70/30 und am meisten bevorzugt von 40/60 bis 60/40 ist.

4. Wachsüberzug gemäß einem der Ansprüche 1 bis 3, wobei das Molekulargewicht des Blockpolymers größer als 1000 Da und kleiner als 100.000 Da ist, insbesondere kleiner als 50.000 Da und vorzugsweise kleiner als 30.000 Da.

5. Wachsüberzug gemäß einem der Ansprüche 1 bis 4, umfassend des Weiteren einen Zusatzstoff, dessen Gewichtsanteil kleiner ist als 30 % des Gesamtgewichts der Zusammensetzung.

6. Verfahren zum Überziehen eines Lebensmittelerzeugnisses, insbesondere eines Käses, und ganz besonders eines Hartkäses, umfassend einen Schritt der Applikation eines Wachsüberzuges, wie in einem der Ansprüche 1 bis 5 definiert, auf ein gesamtes Lebensmittelerzeugnis oder auf einen Teil eines Lebensmittelerzeugnisses.

7. Verfahren zum Überziehen gemäß Anspruch 6, wobei der Schritt der Applikation ein Schritt des Eintauchens des zu überziehenden Erzeugnisses in den viskosen Wachsüberzug ist, wobei dieser Schritt des Eintauchens wahlweise zweimal durchgeführt wird, und wobei dieser Schritt der Applikation von einem Schritt des Abkühlens des überzogenen Erzeugnisses gefolgt ist, beispielsweise durch Eintauchen in eine Eiswasserlösung.

8. Verfahren zum Überziehen gemäß Anspruch 6, wobei der Schritt der Applikation ein Schritt des Formgießens des zu überziehenden Erzeugnisses mit dem geschmolzenen und sehr viskosen Wachsüberzug ist und wobei dieser Schritt des Formgießens gefolgt ist von einem Schritt des Abkühlens des überzogenen Erzeugnisses, beispielsweise durch Eintauchen in eine Eiswasserlösung.

9. Überzogenes Lebensmittelerzeugnis, insbesondere ein überzogener Käse, erhältlich durch das Verfahren gemäß einem der Ansprüche 6 bis 8.

10. Verwendung eines Wachsüberzuges gemäß einem der Ansprüche 1 bis 5 zum Überziehen eines Lebensmittelerzeugnisses, insbesondere eines Käses, und ganz besonders eines Hartkäses.

## Claims

1. A coating wax for food product, for cheese in particular, and more particularly for firm cheese, comprising at least one block copolymer formed of at least one block polymer (A) derived from the polymerization of at least two monomers (M_{A}), the same or different, derived from long chain fatty acids, the said long chain comprising 14 to 34 carbon atoms, more particularly 14 to 22 carbon atoms; and of at least one block polymer (B), different from (A), derived from the polymerization of at least two monomers (M_{B}), the same or different, derived from short chain fatty acids, the said short chain preferably comprising 2 to 16 carbon atoms.

2. The coating wax according to claim 1 wherein the fatty acid derived monomer (M_{A}) or (M_{B}) meets the following general formula (I): 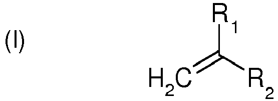 wherein:
- R₁ is a hydrogen atom or a straight-chain or branched alkyl chain comprising 1 to 6 carbon atoms;
- R₂ is a group (CH₂)ₚ-OCOR₃, (CH₂)ₚ-OR₄, or COOR₅, with p = 0 or 1;
- R₃, R₄ and R₅ are the same or different and represent branched or straight-chain alkyl chains derived from saturated fatty acids.

3. The coating wax according to any of claims 1 to 2 wherein the weight proportion of the two monomers (M_{A}) and (M_{B}) is between 5:95 and 95:5, advantageously from 20:80 to 80:20, preferably from 30:70 to 70:30 and more preferably from 40:60 to 60:40.

4. The coating wax according to any of claims 1 to 3 wherein the molecular weight of the block copolymer is higher than 1000 Da and lower than 100 000 Da, more particularly lower than 50 000 Da, and preferably lower than 30 000 Da.

5. The coating wax according to any of claims 1 to 4 further comprising an additive whose weight proportion is less than 30 % of the total weight of the composition.

6. A process for coating a food product, in particular a cheese and more particularly a firm cheese, comprising a step to apply to a whole food product or to a portion of a food product a coating wax such as defined according to any of claims 1 to 5.

7. The coating process according to claim 6, wherein the application step is an immersion step of the product to be coated in the coating wax in the viscous state, this immersion step optionally being conducted in two operations, and wherein the application step is followed by a cooling step of the coated product, for example by immersing in an iced water solution.

8. The coating process according to claim 6, wherein the application step is a moulding step of the product to be coated with the coating wax in the molten and highly viscous state, and wherein this moulding step is followed by a cooling step of the coated product, for example by immersing in a solution of iced water.

9. A coated food product, in particular a coated cheese, able to be obtained using the process according to any of claims 6 to 8.

10. The use of a coating wax according to any of claims 1 to 5 to coat a food product, a cheese in particular, and more particularly a firm cheese.
